# FASCICULE DE BREVET EUROPEEN

(11) **EP 2 190 210 B1**
(45) Date de publication et mention de la délivrance du brevet: **31.08.2011**
(21) Numéro de dépôt: 09174281.7
(22) Date de dépôt: 28.10.2009
(51) Int. Cl.: H04Q 1/02

(54) **Dispositif modulaire à affichage d'état en face avant, et application**
Moduläre Vorrichtung zur Anzeige des Frontseiten-Zustands und entsprechende Anwendung
Modular device with status display on the front face, and application

(30) Priorité: 20.11.2008 FR 0857880
(43) Date de publication de la demande: 26.05.2010
(73) Titulaire: Legrand France, 87000 Limoges (FR); Legrand SNC, 87000 Limoges (FR)
(72) Inventeur: Guitard, Julien, 38160, Saint-Marcellin (FR)
(74) Mandataire: Bentz, Jean-Paul

(56) Documents cités:
- FR-A- 2 765 407
- US-A- 3 958 087
- US-A- 4 190 749

## Description

L'invention concerne, de façon générale, la conception des coffrets, armoires, et autres dispositifs de connexion.

Plus précisément, l'invention concerne, selon un premier aspect, un dispositif modulaire présentant une face avant, un ensemble d'indicateurs collectivement représentatifs d'un état adopté par le dispositif parmi un ensemble d'états possibles, et une pluralité de modules disposés sur la face avant et juxtaposés suivant une direction d'alignement, chaque module présentant une configuration intervenant dans la définition de l'état du dispositif et choisie parmi une collection prédéterminée de configurations possibles.

Le document US 4190749 montre aussi une molette rotative d'un commutateur fournissant un module de commutation avec un anneau translucide pour indiquer les positions de la molette meme.

Des dispositifs modulaires de ce type sont utilisés dans de nombreuses applications, et prennent notamment la forme d'armoires ou de coffrets de brassage, tels que des coffrets de communication multimédia.

Les dispositifs de ce genre comportent traditionnellement d'une part des prises d'entrée reliées à des lignes de transmission de signaux telles que des lignes téléphoniques, des câbles de télévision, ou des lignes de réseau informatique local, d'autre part des prises de sortie normalisées, telles que des prises de type RJ45, et enfin des modules de brassage propres à relier une prise de sortie correspondante à une prise d'entrée de l'un des types disponibles.

Ainsi, chaque module de brassage prend une configuration déterminée par le type de la prise d'entrée à laquelle il est relié, et le dispositif modulaire adopte un état déterminé par la séquence des configurations respectives que prennent les différents modules de ce dispositif.

Compte tenu de la combinatoire importante qu'engendre une structure de ce genre, il est crucial, pour toute intervention sur un tel dispositif, de faire en sorte que l'accès à l'information que constitue le schéma des connexions internes de ce dispositif soit relativement aisé.

Ce résultat est aujourd'hui atteint en utilisant des repères colorés fixés sur les différents câbles de liaison, ce qui n'est possible qu'avec un dispositif modulaire conçu de manière telle que ces câbles restent visibles.

La présente invention a pour but de proposer un dispositif modulaire permettant de s'affranchir de cette contrainte.

A cette fin, le dispositif de l'invention, par ailleurs conforme à la définition générique qu'en donne le préambule ci-dessus, est essentiellement caractérisé en ce que chaque indicateur est monté à rotation autour d'un axe lié à un module correspondant, en ce que chaque indicateur est conçu pour pouvoir adopter autour de son axe une position angulaire stable choisie parmi plusieurs positions angulaires possibles en nombre au moins égal au nombre de configurations possibles de ladite collection, et en ce que chaque indicateur est accessible sur la face avant pour pouvoir être sélectivement placé dans l'une de ses positions angulaires stables, représentative de la configuration du module correspondant.

Dans le mode de réalisation préféré de l'invention, l'axe de rotation de chaque indicateur est parallèle à la direction d'alignement.

En outre, chaque indicateur comprend avantageusement au moins un tambour cylindrique de révolution présentant deux extrémités opposées concaves engagées sur des reliefs de centrage respectifs portés par un boîtier du module correspondant.

Pour pouvoir placer chaque indicateur dans l'une de ses positions angulaires stables, il est par exemple possible de prévoir que le tambour de chaque indicateur présente, sur sa face interne, une pluralité de reliefs d'indexage en nombre au moins égal au nombre de configurations possibles de ladite collection, que le boîtier du module correspondant comporte une patte élastique en appui sur la face interne du tambour de cet indicateur, et que la patte élastique coopère avec chaque relief d'indexage pour caler cet indicateur de façon réversible dans l'une de ses positions angulaires stables.

L'invention est particulièrement applicable à la réalisation d'un coffret de communication multimédia doté d'un affichage du schéma de connexion des prises qui l'équipent.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue partielle en perspective d'un dispositif conforme à l'invention;
- la figure 2 est une vue en perspective à plus grande échelle d'un détail d'un dispositif tel qu'illustré à la figure 1;

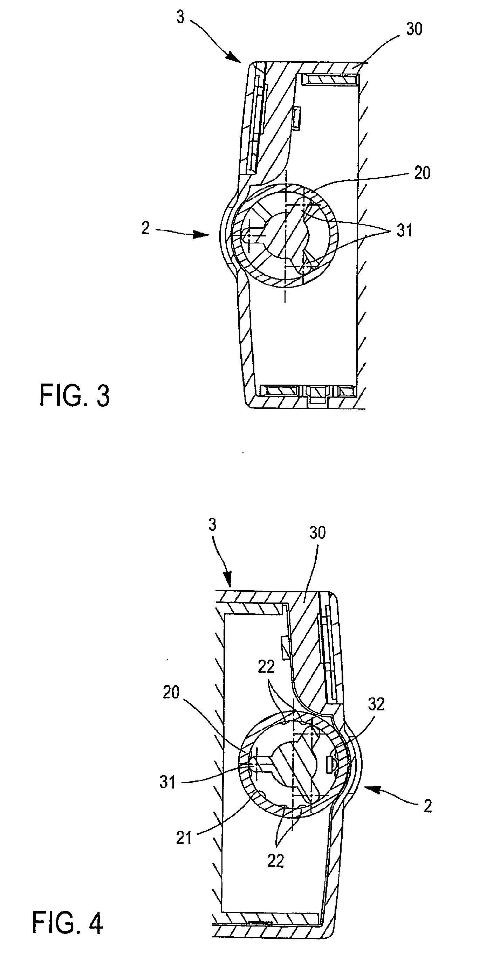

- la figure 3 est une vue en coupe partielle d'un module appartenant au dispositif illustré à la figure 2 et observé suivant l'incidence repérée par les flèches III-III de la figure 5;
- la figure 4 est une vue en coupe partielle d'un module appartenant au dispositif illustré à la figure 2 et observé suivant l'incidence repérée par les flèches IV-IV de la figure 5;
- la figure 5 est une vue en coupe partielle d'un module appartenant au dispositif illustré à la figure 2, la coupe étant réalisée suivant un plan médian de l'indicateur de ce module, dont la trace est repérée par les flèches V-V de la figure 6, ce plan passant par l'axe de rotation de cet indicateur; et
- la figure 6 est une vue en coupe partielle agrandie d'un module appartenant au dispositif illustré à la figure 2 et observé suivant l'incidence repérée par les flèches VI-VI de la figure 5.

Comme annoncé précédemment, l'invention concerne un dispositif modulaire présentant une face avant 1, un ensemble d'indicateurs 2, et une pluralité de modules 3.

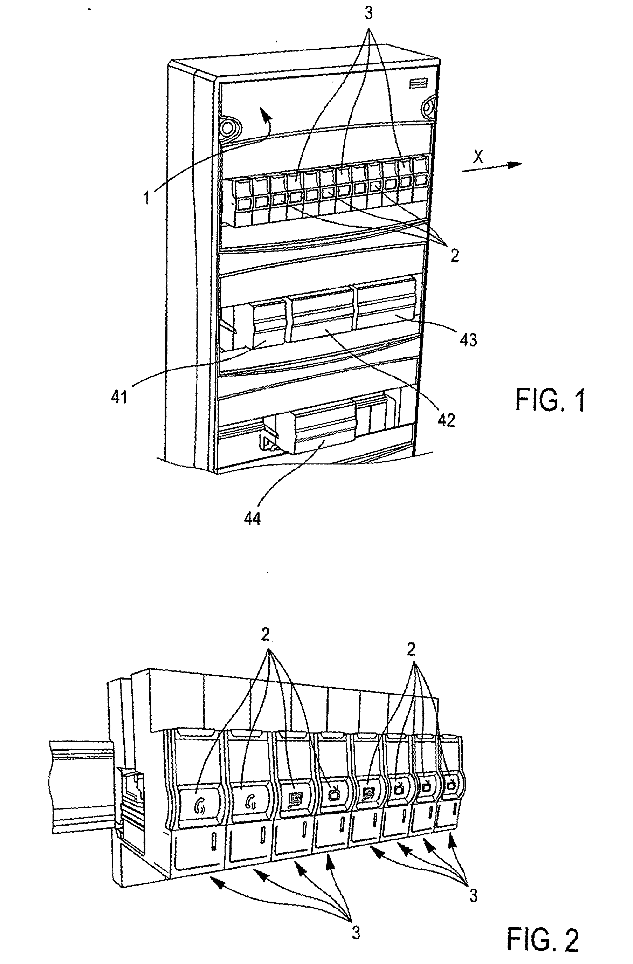

Le dispositif illustré à la figure 1 à titre d'exemple non limitatif constitue un coffret de communication multimédia et comprend en outre des prises de type RJ45 (non visibles) ainsi que divers blocs fonctionnels tels que 41, 42, 43 et 44, dédiés à différents média tels que la téléphonie, la télévision ou un réseau informatique local.

Les indicateurs 2 sont collectivement représentatifs de l'état adopté par le dispositif modulaire parmi un ensemble d'états possibles dont chacun se distingue de chaque autre état par le fait qu'au moins un des modules 3 de ce dispositif n'est pas relié au bloc fonctionnel de même type.

Les modules 3 sont disposés sur la face avant 1 du dispositif et juxtaposés suivant une direction d'alignement X.

Selon l'invention, chaque indicateur 2 est monté à rotation autour d'un axe Xo lié à un module correspondant 3.

Plus précisément, chaque indicateur 2 est conçu pour pouvoir adopter, autour de son axe de rotation Xo, une position angulaire stable choisie parmi plusieurs positions angulaires stables possibles.

Le nombre de positions angulaires stables possibles de chaque indicateur 2 est égal ou supérieur au nombre de types de blocs fonctionnels tels que 41 à 44, c'est-à-dire encore au nombre de façons possibles de raccorder à un bloc fonctionnel le module 3 correspondant.

A chaque position angulaire stable de chaque indicateur 2 correspond un symbole apposé sur cet indicateur et visible sur la face avant 1 du dispositif.

Par ailleurs, chaque indicateur 2 est directement accessible sur cette face avant 1 pour pouvoir être placé à volonté dans celle de ses positions angulaires stables qui permet de rendre visible le symbole représentant le type de bloc fonctionnel auquel est raccordé le module 3 correspondant à cet indicateur.

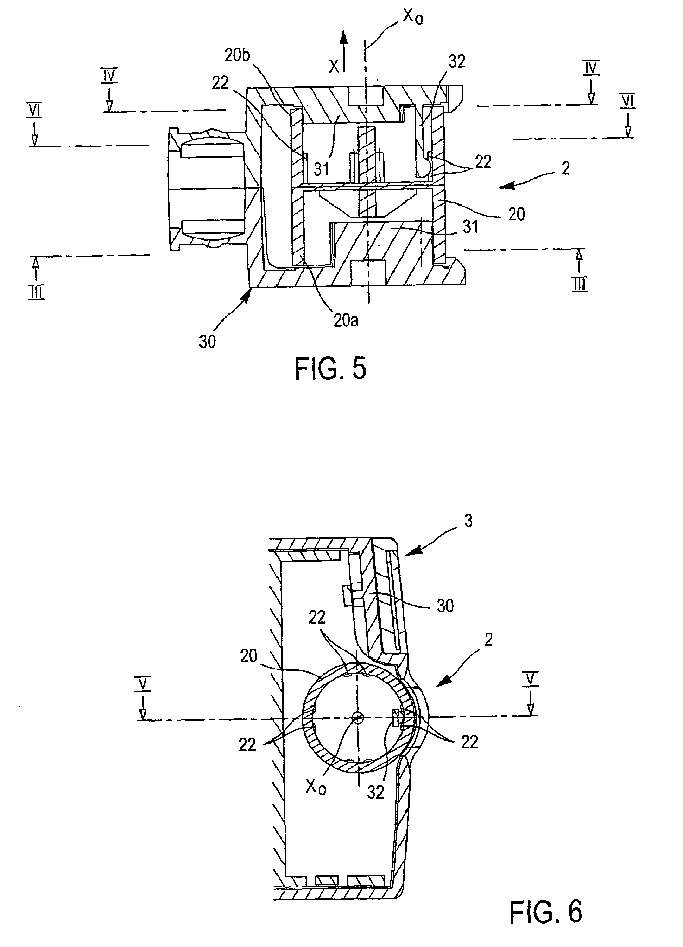

De préférence, et comme le montre la figure 5, l'axe de rotation Xo de chaque indicateur 2 est parallèle à la direction d'alignement X.

Chaque indicateur 2 peut avantageusement être constitué d'un tambour cylindrique de révolution 20 présentant deux extrémités opposées ouvertes ou concaves, 20a et 20b.

Ces extrémités 20a et 20b peuvent ainsi être engagées sur des reliefs de centrage respectifs 31 qui sont portés par le boîtier 30 du module correspondant 3, qui sont par exemple conformés en étoile à trois branches, et qui définissent l'axe de rotation Xo.

Pour définir les positions angulaires stables de chaque indicateur 2, le tambour 20 de cet indicateur 2 peut présenter, sur sa face interne 21, une pluralité de reliefs d'indexage 22 en nombre égal au nombre de positions angulaires stables à prévoir.

De son côté, le boîtier 30 du module 3 correspondant à cet indicateur 2 comporte une patte élastique 32 qui est en appui sur la face interne 21 du tambour 20 de l'indicateur.

La patte élastique 32 peut ainsi coopérer avec chaque relief d'indexage 22 pour caler cet indicateur 2, de façon réversible, dans la position angulaire stable correspondant à l'emplacement du relief d'indexage.

Comme le montre la figure 1, l'invention est particulièrement applicable à la réalisation d'un coffret de communication multimédia doté, sur sa face avant, d'un affichage du schéma de connexion des prises qui l'équipent.

## Revendications

1. Dispositif modulaire présentant une face avant (1), un ensemble d'indicateurs (2) collectivement représentatifs d'un état adopté par le dispositif parmi un ensemble d'états possibles, et une pluralité de modules (3) disposés sur la face avant (1) et juxtaposés suivant une direction d'alignement (x), chaque module (3) présentant une configuration intervenant dans la définition de l'état du dispositif et choisie parmi une collection prédéterminée de configurations possibles, **caractérisé en ce que** chaque indicateur (2) est monté à rotation autour d'un axe (Xo) lié à un module correspondant (3), **en ce que** chaque indicateur (2) est conçu pour pouvoir adopter autour de son axe (Xo) une position angulaire stable choisie parmi plusieurs positions angulaires possibles en nombre au moins égal au nombre de configurations possibles de ladite collection, **en ce que** chaque indicateur (2) est accessible sur la face avant (1) pour pouvoir être sélectivement placé dans l'une de ses positions angulaires stables, représentative de la configuration du module correspondant (3), et **en ce que** chaque indicateur (2) comprend au moins un tambour cylindrique de révolution (20) présentant deux extrémités opposées concaves (20a, 20b) engagées sur des reliefs de centrage respectifs (31) portés par un boîtier (30) du module correspondant (3).

2. Dispositif modulaire suivant la revendications 1, **caractérisé en ce que** l'axe de rotation (Xo) de chaque indicateur (2) est parallèle à la direction d'alignement (X).

3. Dispositif modulaire suivant l'une quelconque des revendications précédentes, **caractérisé en ce que** le tambour (20) de chaque indicateur (2) présente, sur sa face interne (21), une pluralité de reliefs d'indexage (22) en nombre au moins égal au nombre de configurations possibles de ladite collection, **en ce que** le boîtier (30) du module correspondant (3) comporte une patte élastique (32) en appui sur la face interne (21) du tambour (20) de cet indicateur (2), et **en ce que** la patte élastique (32) coopère avec chaque relief d'indexage (22) pour caler cet indicateur (2) de façon réversible dans l'une de ses positions angulaires stables.

4. Application d'un dispositif suivant l'une quelconque des revendications précédentes à la réalisation d'un coffret de communication multimédia doté d'un affichage du schéma de connexion des prises qui l'équipent.

## Claims

1. A modular device having a front face (1), a set of indicators (2) collectively representing one status adopted by the device from among a set of possible statuses, and a plurality of modules (3) disposed on the front face (1) and placed side by side in a direction of alignment (X), each module (3) having a configuration involved in defining the status of the device and selected from among a predetermined set of possible configurations, **characterized in that** each indicator (2) is mounted so as to rotate about a pin (Xo) connected to a corresponding module (3), **in that** each indicator (2) is designed in such a way as to be able to adopt about its pin (Xo) a stable angular position selected from among several possible angular positions at least equal in number to the number of possible configurations of said set of configurations, **in that** each indicator (2) can be accessed at the front face (1) to allow it to be selectively placed in one of its stable angular positions, representative of the configuration of the corresponding module (3), and **in that** each indicator (2) comprises at least one cylindrical revolving drum (20) having two opposite concave ends (20a, 20b) fitted onto respective centring bosses (31) carried by a casing (30) of the corresponding module (3).

2. A modular device according to Claim 1, **characterized in that** the axis of rotation (Xo) of each indicator (2) lies parallel to the direction of alignment (X).

3. A modular device according to either one of the preceding claims, **characterized in that** the drum (20) of each indicator (2) has, on its inner face (21), a plurality of indexing bosses (22) at least equal in number to the number of possible configurations of said set of configurations, **in that** the casing (30) of the corresponding module (3) has a resilient lug (32) bearing against the inner face (21) of the drum (20) of said indicator (2), and **in that** the resilient lug (32) cooperates with each indexing boss (22) to reversibly lock said indicator (2) in one of its stable angular positions.

4. Application of a device according to any one of the preceding claims when producing a multimedia communication box provided with a display of the connection diagram of the sockets with which it is equipped.

## Patentansprüche

1. Modulare Vorrichtung mit einer Vorderseite (1), einer Anordnung von Anzeigern (2), die in ihrer Gesamtheit einen von mehreren möglichen von der Vorrichtung eingenommenen Zuständen wiedergeben, und mehreren auf der Vorderseite (1) angeordneten Modulen (3), die einer Ausrichtungsrichtung (X) folgend aneinandergereiht sind, wobei jedes Modul (3) eine Konfiguration aufweist, die die Bestimmung des Zustands der Vorrichtung beeinflusst und die aus einer vorbestimmten Sammlung möglicher Konfigurationen ausgewählt ist, **dadurch gekennzeichnet, dass** jeder Anzeiger (2) um eine Achse (Xo) drehbar gelagert ist, die mit einem entsprechenden Modul (3) zusammenhängt, dass jeder Anzeiger (2) dazu ausgelegt ist, um seine Achse (Xo) eine aus mehreren möglichen Winkelpositionen ausgewählte, stabile Winkelposition einnehmen zu können, deren Anzahl mindestens gleich der Anzahl möglicher Konfigurationen der Sammlung ist, dass jeder Anzeiger (2) auf der Vorderseite (1) zugänglich ist, um selektiv in einer seiner stabilen Winkelpositionen angeordnet zu werden, welche repräsentativ für die Konfiguration des entsprechenden Moduls (3) ist, und dass jeder Anzeiger (2) mindestens eine zylindrische Drehtrommel (20) umfasst, welche zwei sich gegenüberliegende, konkave Enden (20a, 20b) aufweist, die mit jeweiligen Zentriervorsprüngen (31) in Eingriff stehen, welche durch ein Gehäuse (30) des entsprechenden Moduls (3) getragen werden.

2. Modulare Vorrichtung nach Anspruch 1, **dadurch gekennzeichnet, dass** die Drehachse (Xo) jedes Anzeigers (2) parallel zur Ausrichtungsrichtung (X) ist.

3. Modulare Vorrichtung nach einem der vorstehenden Ansprüche, **dadurch gekennzeichnet, dass** die Trommel (20) jedes Anzeigers (2) an ihrer Innenseite (21) mehrere Indexierungserhebungen (22) aufweist, deren Anzahl mindestens gleich der Anzahl möglicher Konfigurationen der Sammlung ist, dass das Gehäuse (30) des entsprechenden Moduls (3) eine elastische Lasche (32) aufweist, die sich gegen die Innenseite (21) der Trommel (20) des Anzeigers (2) abstützt, und dass die elastische Lasche (32) mit jeder Indexierungserhebung (22) zusammenwirkt, um den Anzeiger (2) in einer seiner stabilen Winkelpositionen reversibel festzustellen.

4. Verwendung einer Vorrichtung nach einem der vorstehenden Ansprüche zur Realisierung eines Multimedia-Kommunikationskastens, der mit einer Anzeige des Verbindungsschemas der Stecker versehen ist, mit denen er ausgestattet ist.
